(19) Europäisches Patentamt
European Patent Office
Office européen des brevets

(11) Veröffentlichungsnummer: **0 157 139**
**A2**

(12) # EUROPÄISCHE PATENTANMELDUNG

(21) Anmeldenummer: **85101731.9**

(22) Anmeldetag: **16.02.85**

(51) Int. Cl.4: **C 08 G 73/14**, C 08 G 18/38

(30) Priorität: **28.02.84 DE 3407201**

(43) Veröffentlichungstag der Anmeldung: **09.10.85**
**Patentblatt 85/41**

(84) Benannte Vertragsstaaten: **BE FR GB IT**

(71) Anmelder: **BAYER AG, Konzernverwaltung RP**
**Patentabteilung, D-5090 Leverkusen 1 Bayerwerk (DE)**

(72) Erfinder: **Zecher, Wilfried, Dr., Treptower Strasse 6,**
**D-5090 Leverkusen 1 (DE)**
Erfinder: **Reinking, Klaus, Dr., Robert-Stolz-Stasse 16B,**
**D-5632 Wermelskirchen (DE)**

(54) **Verfahren zur phenolfreien Herstellung von aliphatisch-aromatischen Polyamidimiden.**

(57) Die Erfindung betrifft ein Verfahren zur phenolfreien Herstellung von aliphatisch-aromatischen Polyamidimiden.

EP 0 157 139 A2

0157139

BAYER AKTIENGESELLSCHAFT
Konzernverwaltung RP
Patentabteilung

5090 Leverkusen, Bayerwerk
Eck/Kü-c

# Verfahren zur phenolfreien Herstellung von aliphatisch-aromatischen Polyamidimiden

Es ist bekannt, daß man aliphatisch-aromatische Polyamidimide durch Umsetzung von Isocyanaten mit Lactamen und/oder Polyamiden und cyclischen Polycarbonsäureanhydriden erhält (DE-PS 1 770 202, 1 956 512). Die Reaktion wird im allgemeinen in phenolischen Lösungsmitteln, z.B. technischen Kresol-Gemischen, durchgeführt. Aliphatisch-aromatische Polyamidimide haben in den letzten Jahren als temperaturbeständige Kunststoffe in die Technik, insbesondere auf dem Elektroisoliersektor, Eingang gefunden.

Es wurde nun gefunden, daß man aliphatisch-aromatische Polyamidimide ohne Verwendung von Phenolen herstellen kann, wenn man Lactame im Überschuß anwendet.

Gegenstand der Erfindung ist daher ein Verfahren zur Herstellung von aliphatisch-aromatischen Polyamidimiden aus organischen Polyisocyanaten und Polycarbonsäureanhydriden und gegebenenfalls Polyamiden, dadurch gekennzeichnet, daß Lactame als Umsetzungsmedium verwendet werden.

Die Lactame als Umsetzungsmedium haben bei der erfindungsgemäßen Reaktion die Funktion einer Reaktionskomponente und eines Lösungsmittels. Überraschenderweise wird das Lactam trotz des hohen stöchiometrischen Überschusses von einigen hundert Molprozent in Abhängigkeit von den Reaktionsbedingungen nur in einem Verhältnis von ca. 20-120 Molprozent, bezogen auf die Imid-Gruppen, in das Polyamidimid eingebaut. Auch bei Reaktionstemperaturen von über 200°C erfolgt die zu erwartende Polymerisation des Lactams im allgemeinen nur in unwesentlichen Anteilen.

Die Reaktionsprodukte, in Lactamen gelöste aliphatisch-aromatische Polyamidimide, können in dieser Form weiterverarbeitet und z.B. zu Lackfilmen eingebrannt werden. Damit wird das nach dem eingeführten technischen Verfahren notwendige Arbeiten mit phenolischen Lösungsmitteln vermieden. Bei der Fällung werden von Phenolen freie Polyamidimide erhalten, die z.B. aus geeigneten Lösungsmitteln als Lacke appliziert oder zur Formkörpern verpreßt werden können.

Die Umsetzung erfolgt bei einer Temperatur von 0 bis 400°C, vorzugsweise 30 bis 250°C.

Für die erfindungsgemäße Reaktion können vorzugsweise Polyisocyanate eingesetzt werden, wie sie beispielsweise in der DE-OS 1 770 202 beschrieben sind.

Besonders bevorzugt werden phosgenierte Kondensate aus Anilin und Formaldehyd mit Polyphenylen-methylen-strukturen, technische Gemische aus Toluylendiisocyanaten, m-Phenylen-diisocyanat und symmetrische Verbindungen wie 4,4'-Diisocyanato-diphenylmethan, 4,4'-Diisocyanatodiphenylether, Naphtylen-(1,5)-diisocyanat, p-Phenylen-diisocyanat, 4,4'-Diisocyanato-diphenyl-dimethylmethan, analoge hydro-aromatische Diisocyanate wie 4,4'-Diisocyanato-dicyclohexylmethan sowie aliphatische Diisocyanate mit 2 - 12-C-Atomen wie Hexamethylendiisocyanat und von Isophoron abgeleitete Diisocyanate und deren Gemische.

Anstelle der Isocyanate können auch Verbindungen eingesetzt werden, die unter den Reaktionsbedingungen als Isocyanate reagieren, vorzugsweise die Additionsverbindungen von Alkoholen und Lactamen, z.B. von Alkoholgemischen und Caprolactam oder von Gemischen aus den den Isocyanaten entsprechenden Aminen und aliphatischen und aromatischen Kohlensäureestern, z.B. Kohlensäurediethylester, Kohlensäurediphenylester und Ethylencarbonat, die auch bereits partiell miteinander umgesetzt sein können, oder auch Polycarbodiimide und Isocyanato-isocyanurate aus den beschriebenen Polyisocyanaten.

Zur Regulierung des Molekulargewichts können auch monofunktionelle Isocyanate wie z.B. Phenylisocyanat, Tolylisocyanat, Cyclohexylisocyanat, Stearylisocyanat, ω,ω,ω-Trifluorethylisocyanat und 3,5-Trifluormethyl-phenylisocyanat oder die entsprechenden Amine eingesetzt werden.

Als Säureanhydride für die erfindungsgemäße Reaktion können cyclische Polycarbonsäureanhydride verwendet werden, wie sie in DE-OS 170 202 und DE-OS 2 542 706 beschrieben werden, vorzugsweise Polycarbonsäureanhydride der allgemeinen Formel (I)

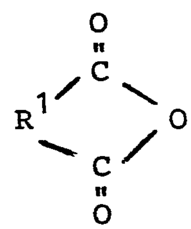

(I),

in welcher

$R^1$ einen gegebenenfalls substituierten aliphatischen $C_2$-$C_{20}$-Rest, cycloaliphatischen $C_5$-$C_{10}$-Rest, einen aliphatisch-aromatischen Rest mit 1 bis 10 C-Atomen im aliphatischen Teil und 6 bis 10 C-Atomen im aromatischen Teil oder einen aromatischen Rest mit 6 bis 10 C-Atomen bedeutet, der neben der cyclischen Anhydridgruppe mindestens noch eine weitere cyclische Anhydridgruppe oder eine Carboxylgruppe trägt.

Als Beispiele seien Butantetracarbonsäuredianhydrid, Cyclopentantetracarbonsäuredianhydrid, Pyromellitsäuredianhydrid, Benzophenontetracarbonsäuredianhydrid und besonders bevorzugt Trimellitsäureanhydrid aufgeführt.

Anstelle der Carbonsäureanhydride können auch Derivate wie die Alkylester oder Phenylester oder die Polycarbonsäuren selbst eingesetzt werden, die im Verlauf der Reaktion in die Säureanhydride übergehen.

Zur Regulierung des Molekulargewichts werden unter den Reaktionsbedingungen monofunktionell reagierende Carbonsäuren wie z.B. Phthalsäure oder deren Anhydrid, Benzoesäure oder Palmitinsäure eingesetzt, die weiterhin mit Alkyl oder Halogen wie Fluor oder Chlor substituiert sein können.

Als Lactame eignen sich für das erfindungsgemäße Verfahren beispielsweise solche mit der allgemeinen Formel (II)

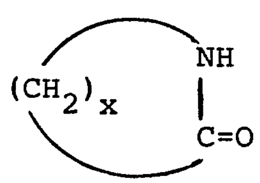

(II),

in welcher x eine ganze Zahl von 2 bis 20, bevorzugt von 5 bis 11, bedeutet.

Vorzugsweise wird Caprolactam eingesetzt.

In Kombination mit den Lactamen können Polyamide eingesetzt werden, wie sie in DE-AS 1 956 512 beschrieben werden, z.B. Polycapronamid (Nylon 6), Polydodecansäureamid und Polyamide aus Dicarbonsäuren wie z.B. Adipinsäure, Sebacinsäure, Oxalsäure, Dibutylmalonsäure, Isophthalsäure und Terephthalsäure und Diaminen wie Ethylendiamin, Hexamethylendiamin, Decamethylendiaminen und m- und p-Phenylendiamin. Bevorzugt verwendet werden Polycapronamid (Nylon 6) und Polyhexamethylenadipamid (Nylon 66).

Die erfindungsgemäß herstellbaren Polyamidimide können durch ihre IR-Spektren, in denen die charakteristischen Banden für Amide und Imide auftreten, identifiziert werden.

Die höhermolekularen Amidimide zeigen eine Lösungsvikosität von 200 - 200 000 mPas, vorzugsweise von 1000 bis 50 000, die an einer 30 %igen Lösung in Dimethylformamid oder Kresol bei 25°C bestimmt wird.

Zur Durchführung der erfindungsgemäßen Reaktion werden die Komponenten einige Minuten bis zu mehreren Stunden bei Temperaturen von 0 - 400°C gehalten. Das Ende der Reaktion zeigt sich durch das Nachlassen der Gasentwicklung und die steigende Viskosität an. Zuweilen ist es vorteilhaft, die Reaktion in mehreren Stufen durchzuführen oder die einzelnen Komponentenin unterschiedlicher Reinhenfolge oder bei verschiedenen Temperaturen zuzugeben. So kann z.B. ein Teil oder

die gesamte Menge des Säureanhydrids oder des Isocyanats mit dem Lactam auf Temperaturen bis 200°C erhitzt werden und dann nach dem Abkühlen und nach Eingabe der übrigen Komponenten die Reaktion in der üblichen Weise durchgeführt werden. Weiterhin kann z.B. in erster Stufe ein Addukt oder Kondensat hergestellt werden, das dann bei höheren Temperaturen, z.B. nach Applikation, auf ein Blech oder einen Draht, evtl. nach Fällung und gegebenenfalls Wiederauflösung, in das hochmolekulare Kondensationsprodukt übergeht. Geeignete Fällungsmittel sind Methanol und Wasser. Eine weitere Ausführungsform besteht darin, in einer ersten Stufe ein Vorkondensat herzustellen und dann in einem Eindampfextruder, gegebenenfalls unter Vakuum, das Polymere aufzukonzentrieren und auszukondensieren. Durch Steigerung der Temperatur und der Reaktionszeit wird der Anteil des in das Polyamid angebauten Lactams erhöht.

In manchen Fällen empfiehlt es sich, die Umsetzung unter einem inerten Schutzgas wie Stickstoff oder Argon durchzuführen. Die Reaktion kann in kontinuierlicher oder diskontinuierlicher Ausführung erfolgen.

Im allgemeinen werden pro Val Isocyanat ein Val Carbonsäure oder cyclisches Carbonsäureanhydrid und gegebenenfalls pro Val Carbonsäureanhydrid 0,3 - 3 Val eines Polyamids zur Umsetzung gebracht, doch sind auch weitgehende Abweichungen von diesen Mengenverhältnissen möglich.

Das Lactam wird im allgemeinen so eingesetzt, daß sich, bezogen auf die Summe von Säureanhydrid und Lactam, Mengenverhältnisse von 5 - 90, vorzugsweise von 15 - 75 Gew.-% ergeben.

Weiterhin können die Kondensationsprodukte durch die Mitverwendung und den Einbau von beispielsweise Polyolen, Polycarbonsäuren sowie Polyamiden, Polyhydantoinen, Polycarbonamidestern, Polyestern und Polyethern modifiziert werden. Als Beispiele seien Ethylenglykol, Isophthalsäure und Trimesinsäure, Hexamethylolmelamin, Polyalkoxymethylen-melaminen, Polyester aus Terephthalsäure, Ethylenglykol und Glycerin und Polyhydantoine aus Bisglycinestern und Isocyanaten genannt.

Die erfindungsgemäße Reaktion kann durch Katalysatoren beeinflußt werden, z.B. durch Amine wie Triethylamin, 1,4-Diazabicyclo-(2,2,2)octan, 4-Dimethylaminopyridin, 4-Pyrrolo-(1)-hydrin, N-Ethyl-morpholin und N-Methylimidazol, sowie durch organische und anorganische Metallverbindungen, insbesondere von Eisen, Blei, Zink, Zinn, Kupfer, Kobalt und Titan, wie Eisen(III)-chlorid, Kobaltacetat, Bleioxid, Bleiacetat, Zinnoctoat, Dibutyl-zinn-dilaurat, Kupfer-acetyl-acetonat, Titantetrabutylat, Alkaliphenolate und Natriumcyanid und durch Phosphorverbindungen wie Trialkylphosphin und Methylphospholinoxid.

Die erfindungsgemäßen Polyamidimide zeichnen sich durch besondere Temperaturbeständigkeit aus und sind geeignet als Kleber, Lacke, Folien und Formkörper. Ihre Eigenschaften können für die verschiedenen Einsatzgebiete durch Zusatz von Füllstoffen, Pigmenten und nieder- und hochmolekularen Komponenten in weiten Grenzen variiert werden.

Beispiel 1

In 1740 g Caprolactam werden bei 120°C 750 g 4,4'-Diisocyanatodiphenylamin anteilweise nach Maßgabe der exothermen Reaktion und anschließend 576 g Trimellitsäureanhydrid eingetragen. Dann wird aufgeheizt jeweils 2 Stunden bei 160, 170, 190, 205 und 220°C gerührt. Die Kondensation zum Polyamidimid erfolgt unter Abspaltung von Kohlendioxid. Dann werden bei 100 mbar 725 g Caprolactam abdestilliert. Man erhält das Reaktionsprodukt als klare Schmelze mit einem Festgehalt von ca. 70 Gew.-%, die beim Erkalten zu einem spröden Harz erstarrt. Das IR-Spektrum enthält bei 1715 und 1775 $cm^{-1}$ die für Imide charakteristischen Banden. Die Viskosität $\eta^{25}$ einer 15 %igen Lösung des Polyamidimids in Kresol beträgt 860 mPas. Eine Probe des Harzes wird mit 3 %, bezogen auf den Festgehalt, Dodecanlactam versetzt und im Stickstoffstrom bei 300 bis 320°C eingedampft. Man erhält ein klares elastisches Harz, das in der Hitze noch verformbar ist.

Eine 15 %ige Lösung des Polyamidimids in Kresol wird auf eine Glasplatte aufgestrichen und in jeweils 15 Minuten bei 200 und 300°C zu einem klaren elastischen Film eingebrannt.

Eine Probe der 15 %igen Lösung in Kresol wird in Methanol eingerührt. Man erhält das Polyamidimid als gelbes Pulver. Die Analyse ergibt einen Stickstoffgehalt

von 9,0 %, entsprechend einem Anteil von einem Mol eingebautem Caprolactam pro Mol Trimellitsäureanhydrid.

Beispiel 2

In 580 g Caprolactam werden bei 120 - 130°C 250 g 4,4'-Diisocyanatodiphenylmethan und 192 g Trimellitsäureanhydrid eingetragen. Dann wird die Temperatur gesteigert und die Kondensation in jeweils 2 Stunden bei 160, 170 und 190°C durchgeführt. Anschließend werden bei ca. 200°C unter Vakuum 225 g Caprolactam abdestilliert.

Man erhält ein sprödes Harz mit den für Imido charakteristischen Banden im IR-Spektrum bei 1715 und 1775 $cm^{-1}$. Die Fällung einer Lösung des Harzes in Kresol mit Methanol ergibt das Polyamidimid als gelbes Pulver mit einem Stickstoffgehalt von 8,5 % entsprechend 0,55 Mol eingebautem Caprolactam pro Mol Trimellitsäureanhydrid.

Beispiel 3

In 500 g Caprolactam werden bei 120°C 174 g eines technischen Gemisches aus 80 % 2,4- und 20 % 2,6-Toluylendiisocyanat und 192 g Trimellitsäureanhydrid eingetragen. Dann wird das Reaktionsgemisch aufgeheizt und jeweils 2 Stunden bei 160, 170 und 190°C und 4 Stunden bei 205°C gerührt. Danach werden unter Vakuum

bei Temperaturen um 200°C ca. 210 g Caprolactam abdestilliert. Man erhält das Polyamidimid als 70 %ige klare Schmelze, die beim erkalten zu einem spröden Harz erstarrt. Die Viskosität $\eta^{25}$ einer 15 %igen Lösung in Kresol beträgt 500 mPas.

Eine Probe des Harzes wird im Vakuum bei 300°C zu einem klaren harten Harz eingedampft.

Beispiel 4

In 525 g Caprolactam werden bei 120°C 16,8 g Hexamethylendiisocyanat, 100 g 4,4'-Diisocyanato-diphenylmethan und 96 g Trimellitsäureanhydrid eingetragen. Dann wird die Kondensation unter Rühren in jeweils 2 Stunden bei 150, 170,190 und 200°C und 4 Stunden bei 220° ausgeführt. Die ca. 33 %ige Schmelze des Polyamidimids erstarrt beim Erkalten zu einer spröden Masse. Das IR-Spektrum enthält bei 1710 und 1775 $cm^{-1}$ die für Imid charakteristischen Banden.

Eine Probe des Harzes wird aus der Schmelze mit Wasser gefällt. Man erhält das Polyamidimid als gelbes Pulver mit einem Stickstoffgehalt, bestimmt nach Kjeldahl, von 9,12 %. Eine Lösung des Polymeren in Kresol wird auf ein Glasplatte aufgestrichen und in jeweils 15 Minuten bei 200 und 300°C zu einem klaren elastischen Lackfilm eingebrannt.

Beispiel 5

In 565 g Caprolactam werden 35 g eines technischen Gemisches aus 80 % 2,4- und 20 % 2,6-Toluylendiisocyanat, 200 g 4,4'-Diisocyanato-diphenylmethan und 192 g Trimellitsäureanhydrid unter Rühren in jeweils 2 Stunden bei 150, 170 und 190°C und 4 Stunden bei 215°C zur Umsetzung gebracht. Dann wird mit 450 g Caprolactam verdünnt. Man erhält eine ca. 33 %ige Lösung des Polyamidimids, die beim Erkalten zu einem spröden Harz erstarrt. Die Viskosität einer 15 %igen Lösung des Harzes, bezogen auf den Festgehalt in Kresol, beträgt $\eta^{25}$ = 1060 mPas. Eine Probe des Harzes wird mit Methanol als gelbes Pulver gefällt, in Kresol gelöst und auf einer Glasplatte in jeweils 15 Minuten bei 200 und 300°C zu einem klaren elastischen Film eingebrannt.

Beispiel 6

In eine Schmelze aus 1070 g Caprolactam und 39 g Dodecanlactam werden bei 120°C 255 g 4,4'-Diisocyanato-diphenylmethan und 192 g Trimellitsäureanhydrid eingetragen. Dann wird jeweils 2 Stunden bei 150, 170, 190, 200, 210 und 200° gerührt. Beim Erkalten erstarrt das Reaktionsprodukt zu einer spröden Masse. Der Gehalt an Polyamidimid beträgt ca. 33 Gew.-%. Die Viskosität einer 15 %igen Lösung in Kresol beträgt $\eta^{25}$ = 2460. Eine Probe des Harzes wird nach Zugabe von 2 % eines

technischen Gemisches isomerer Nonylphenole in einem Stickstoffstrom bei 300 - 310°C zu einem klaren elastischen Polymeren eingedampft.

Beispiel 7

In eine Mischung aus 235 g Caprolactam und 57 g Polycapronamid (Nylon 6) werden bei 120°C 125 g 4,4'-Diisocyanatodiphenylmethan und 96 g Trimellitsäureanhydrid eingetragen. Die Kondensation zum Polyamidimid wird unter Rühren in jeweils 2 Stunden bei 150, 170, 190, 200, 210 und 220°C ausgeführt. Anschließend wird mit 230 g Caprolactam auf einen Festgehalt von ca. 33 Gew.-% verdünnt. Die Lösung wird ausgegossen und erstarrt beim Erkalten zu einer spröden Masse. Die Viskosität einer 15 %igen Lösung in Kresol beträgt $\eta^{25}$ = 2180. Eine Lösung des Harzes in Kresol wird auf eine Glasplatte aufgestrichen und in jeweils 15 Minuten bei 200 und 300°C zu einem klaren elastischen Film eingebrannt. Die Fällung des Harzes aus einer Lösung in Kresol mit Methanol ergibt das Polyamidimid als gelbes Pulver, das bei 300°C aufgeschmolzen und verformt werden kann.

Beispiel 8

In 500 g Caprolactam werden bei 120-130 °C 17,4 g eines technischen Gemisches aus 80 Gew.-% 2,4- und 20 Gew.-% 2,6-Toluylendiisocyanat, 225 g 4,4'-Diisocyanatodiphenylenethan, 10,77 g N-Dodecyltrimellitsäureimid und 189,12 g Trimellitsäureanhydrid eingetragen. Dann wird 2 Stunden bei 170 °C, 2 Stunden bei 190 °C, 4 Stunden bei 205 °C und 5 Stunden bei 225 °C gerührt. Die Kondensation erfolgt unter Abspaltung von Kohlendioxid. Das Polyamidimid wird als Schmelze ausgetragen und erstarrt zu einem klaren gelbbraunen Harz. Die Viskosität einer 25 %igen Lösung in m-Kresol 70 beträgt $\eta^{25}$ = 1790 m Pas . Eine Probe der 15 %igen Lösungen des Polyamidimids in Kresol wird auf eine Glasplatte aufgestrichen und in jeweils 15 Min. bei 200 und 300 °C zu einem klaren elastischen Lackfilm eingebrannt.
Zur Prüfung als Thermoplast werden 50 g des wie beschrieben hergestellten Polyamidimid-Harzes im Stickstoffstrom jeweils 1 Stunde bei 250 und 310 °C eingedampft. Man erhält ein thermoplastisches Material, das beim Erkalten zu einem klaren festen Harz erstarrt.

Patentansprüche

1. Verfahren zur Herstellung von aliphatisch-aromatischen Polyamidimiden aus organischen Polyisocyanaten und Polycarbonsäureanhydriden und gegebenenfalls Polyamiden, dadurch gekennzeichnet, daß Lactame als Umsetzungsmedium verwendet werden.

2. Verwendung der Polyamidimide, erhalten nach Anspruch 1, zur Herstellung von temperaturbeständigen Lacken, Folien, Schaumstoffen oder Formkörpern.